# EUROPÄISCHE PATENTSCHRIFT

(11) **EP 3 177 194 B1**
(45) Veröffentlichungstag und Bekanntmachung des Hinweises auf die Patenterteilung: **25.08.2021**
(21) Anmeldenummer: 15778864.7
(22) Anmeldetag: 05.08.2015
(51) Int. Cl.: A47L 13/17

(54) **REINIGUNGSKISSEN ZUM BEHANDELN VON OBERFLÄCHEN**
CLEANING PAD FOR TREATING SURFACES
TAMPON DE NETTOYAGE SERVANT À TRAITER DES SURFACES

(30) Priorität: 05.08.2014 DE 202014103639 U
(43) Veröffentlichungstag der Anmeldung: 14.06.2017
(73) Patentinhaber: Pohlmann, Ulrich, 48683 Ahaus (DE)
(72) Erfinder: Pohlmann, Ulrich, 48683 Ahaus (DE)
(74) Vertreter: Bischof, Oliver
(86) Internationale Anmeldenummer: PCT/EP2015/001612
(87) Internationale Veröffentlichungsnummer: WO 2016/020059

(56) Entgegenhaltungen:
- EP-A1- 0 929 250
- DE-A1-102012 009 422
- US-A- 3 849 225
- US-A- 4 015 306
- US-A- 4 603 069
- US-A- 4 665 580
- US-A1- 2006 135 026
- None

## Beschreibung

Die Erfindung betrifft ein Reinigungskissen zum Behandeln von insbesondere glatten Oberflächen nach dem Oberbegriff des Anspruchs 1 sowie ein Herstellungsverfahren nach dem Oberbegriff des Anspruchs 10.

Ein Reinigungskissen der eingangs genannten Art ist aus der EP 0 929 250 A1 bekannt.

Ein Reinigungskissen mit einem elastisch verformbaren, überwiegend aus Schaumstoff gefertigten Kern und mit einem aus zwei Zuschnitten bestehenden Reinigungsbezug lässt sich auch der DE 298 09 476 U1 entnehmen. Der dort gezeigte Reinigungsbezug ist aus zwei flächenmäßig im Wesentlichen deckungsgleichen Materialzuschnitten gefertigt, die an ihren Randbereichen miteinander vernäht sind. Die Einbringung einer textilen Naht am Umfang eines elastischen Reinigungskissens ist jedoch oft schwierig und führt häufig zu ungleichmäßigen Nahtverläufen im Bereich der Außenkanten, insbesondere dann, wenn die Elastizitäten der eingesetzten Materialzuschnitte für die zwei Seiten unterschiedlich sind. Es muss auch ein Garn von entsprechender Elastizität gewählt werden. Weiterhin weist die Naht eine andere Struktur als der Reinigungsbezug selbst auf. So kann beispielsweise ein zunächst flexibler Kunststofffaden mit der Zeit altern, aushärten oder stellenweise brechen. Der Kunststofffaden selbst, und erst recht etwaige Anfangs- oder Bruchstellen, können die zu reinigende Oberfläche beschädigen bzw. zu unerwünschten Kratzern führen. Die Nähte sind zudem im Betrieb hohen mechanischen Belastungen ausgesetzt, insbesondere wenn die Reinigungskissen in der Waschmaschine waschbar sein sollen, was sehr wünschenswert ist.

Weiterhin eignet sich der Randbereich eines Reinigungskissens grundsätzlich, um dort Abbildungen, Texte oder Firmenlogos bzw. Werbebotschaften anzubringen. Diese Abbildungen werden durch eine mit einem Faden eingebrachte Naht verdeckt bzw. unansehnlich, so dass bei derzeit bekannten Reinigungskissen in diesem Bereich keine solchen Informationen sichtbar aufgedruckt werden können.

Der Erfindung liegt das Problem zugrunde, hier eine Verbesserung zu erreichen.

Die Erfindung löst das Problem durch ein Reinigungskissen mit den Merkmalen des Anspruchs 1 und durch ein Verfahren mit den Merkmalen des Anspruchs 10. Hinsichtlich weiterer vorteilhafter Ausgestaltungen und Weiterbildungen wird auf die Ansprüche 2 bis 9 und 11 und 12 verwiesen.

Dadurch, daß wenigstens einer der Materialzuschnitte auf seiner dem Kern zugewandten Oberfläche zumindest in seinem äußeren Randbereich mit einem aktivierbaren oder aktivierten Klebermaterial beschichtet ist, ist zunächst ein stabiles, flächiges Verkleben der Randbereiche möglich, so daß eine sehr gute Haftung entsteht, die die Materialzuschnitte auch im Dauerbetrieb stabil aneinander festhält.

Hierzu ist vorgesehen, dass das Klebermaterial als aktivierbare Lage flächig auf wenigstens einem der Materialzuschnitte auf seiner dem Kern zugewandten Oberfläche aufgelegt ist. Eine solche großflächige Lage wird erfindungsgemäss herstellungstechnisch einfach dadurch geschaffen, dass wenigstens einer der Materialzuschnitte auf seiner dem Kern zugewandten Oberfläche vollflächig von einer Klebegaze unterlegt ist.

Dabei ist das Klebermaterial zur Bildung einer Klebe- oder Schweißnaht thermisch aktiviert. Dann ist in der Produktion das Klebermaterial zunächst nicht klebend und wird erst durch Aufsetzen eines entsprechenden Stempels, der mit einer Hochfrequenzerzeugung versehen ist, aktiviert. Das vereinfacht die Herstellung.

Besonders günstig ist die Naht bis zum äußersten Rand geschlossen ist und weist eine Breite von zumindest zwei Millimetern auf. Insbesondere ist auch eine Breite von fünf Millimetern möglich. Durch das Schließen bis zum äußersten Rand ergibt sich kein Ansatz, um die beiden an der Naht aneinander haftenden Materialzuschnitte auseinanderzureißen. So kann etwa auch in der Waschmaschine keine Lauge zwischen die Materialzuschnitte des Bezugs eindringen. Der stabile Rand von mehreren Millimetern Breite gibt zudem einerseits eine starke Haftungsfläche, andererseits auch eine Beschriftungsfläche, die bis zum äußersten Rand bedruckt werden kann, ohne daß die Schrift verwischt oder durch Verwerfungen unleserlich wäre. Dort können zum Beispiel Herstellerangaben oder eine Waschanleitung aufgedruckt werden. Die Wertigkeit des so geschaffenen Reinigungskissens ist deutlich erhöht.

Die Klebegaze kann dabei eine flexible, in alle Richtungen elastisch dehnbare, netzähnliche Struktur aufweisen. Es werden praktisch keine Anforderungen an ihre mechanische Stabilität gestellt. Insbesondere kann die Klebegaze durch eine in sich unregelmäßige Vlieslage ohne Vorzugsrichtungen im Material gebildet sein. Ein derartiges Material kann sehr preiswert eingekauft werden und hat nur ein minimales Eigengewicht.

Eine solche Klebegaze ist zudem einfach zu verarbeiten und kann, da sie ohne Aktivierung ja noch nicht klebt, sehr vorteilhaft durch Walzen mit dem Material des jeweiligen Materialzuschnitts verbunden sein. Eine hinreichende Haftung am (noch nicht geschnittenen oder gestanzten) bahnförmigen Material des Materialzuschnitts wird dabei allein durch den Walzprozess erreicht.

Die Naht wird über Aktivierung der zumindest einen Klebelage durch Ultraschall-, Hochfrequenz-, Kalt- oder Heißverklebung erreicht.

Beide Seiten des Reinigungskissens können für eine große Flexibilität unterschiedlich sein, zum Beispiel eine Seite mit Mikrofaser belegt zur Feuchtreinigung und eine Seite mit Kunstleder belegt zur Trocknung. Auch ein einheitlicher Bezug (zum Beispiel als Leder, Textilleder oder Kunstfaser) ist alternativ möglich. Die Materialzuschnitte können aus Vliesstoff, z. B. auf Polyamid- oder Polyurethan-Basis oder aus Velours- oder Frottiergewebe oder -gewirke von unterschiedlichen Reinigungseigenschaften oder Antibeschlageigenschaften, bestehen. Besonders vorteilhaft besteht wenigstens einer der Materialzuschnitte aus stark reinigendem sowie schmutzaufnehmendem Mikrofaser-Material. Ein insbesondere aus Kunstleder (Lederimitat) gefertigter Materialzuschnitt kann zahlreiche durchgehende Öffnungen aufweisen. Das Kunstleder kann einen velourartigen, weichen, samtigen Griff haben, welcher optisch und haptisch dem echten Wildleder entspricht.

Auch kann zwischen den Materialzuschnitten sich eine flüssigkeitsundurchlässige, elastische Membran erstrecken, die das Reinigungskissen in zwei Kammern teilt, von denen zum Beispiel eine mit Reinigungsflüssigkeit, wie etwa Antibeschlag- oder Reinigungs- bzw. Desinfektionsmittel, getränkt ist.

Der Kern selbst kann günstig aus einem dauerelastischen, offenzelligen Weichschaum, beispielsweise Polyurethan- Weichschaum, oder aus einer Weichschaum-Vliesstoff-Materialkombination bestehen. Auch ein Recycling-Granulat, zum Beispiel aus Reifen-Resten, ist möglich. Das Material für den Kern kann in Form einer Schüttung oder aus einem Block vorliegen. Außerdem kann der Kern aus wenigstens zwei weichen Materialschichten bestehen, von denen die eine Schicht aus Weichschaum und die andere aus einem Textilmaterial, wie polsterndes Wattevlies, hergestellt ist. Als Weichschaum kann auch Silikonschaum oder bioabbaubarer Viskoseschaum eingesetzt sein.

Insbesondere kann auf einer oder beiden Seiten wenigstens ein Bild, Logo, Werbebotschaft oder dergleichen ein- oder mehrfarbig, bis zum äußersten Rand, über die Klebe- oder Schweißnaht hinaus, aufgetragen sein. Bild, Logo, Schriftzug bzw. Werbeslogan können mit Hilfe eines an sich bekannten Druckverfahrens ein- oder mehrfarbig sowie im Fotodruck oder Prägedruck aufgebracht sein.

Bei einem Herstellungsverfahren ist es bedeutend, wenn zunächst zwei Materialbahnen bereitgestellt werden, von denen zumindest eine mit einer elastischen Lage von aktivierbarem Klebermaterial versehen und erst im so beschichteten Zustand zu einem Materialzuschnitt ausgeschnitten oder ausgestanzt wird. Die Verbindung mit der Klebemateriallage ist dann besonders einfach und preiswert möglich.

Weiter kann dann einer der Materialzuschnitte in einen Kasten eingelegt werden, wobei ein insbesondere quaderförmiger, elastisch verformbarer Kern auf diesen Materialzuschnitt und auf den Kern (1) der zweite Materialzuschnitt aufgelegt wird, wobei der erste und der zweite Materialzuschnitt den Kern seitlich überragen und wobei nachfolgend beide Materialzuschnitte unter Einfassung des Kerns aufeinandergedrückt werden und dabei die Klebelage angelöst wird und die Materialzuschnitte miteinander verklebt und/oder verschweißt werden. Dadurch ergibt sich der breite Randbereich, der stabil und bis außen hin geschlossen ist und der zusätzlich beschriftet werden kann.

Einfach und zuverlässig ist das Verschweißen und/oder Verkleben durch Hochfrequenzeinwirkung aktivierbar. Diese Form der Verbindung schafft einen gleichmäßigen Übergang zwischen den zusammengefügten Materialien und garantiert so sehr hohe Nahtfestigkeiten. Es entstehen keine Lücken und Zwischenräume, wo sich Schmutzpartikel ansammeln können, die so die Haltbarkeit des Reinigungskissen negativ beeinflussen. Darüber hinaus kann die Naht luft- und wasserdicht ausgebildet sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: ein Reinigungskissen gemäß Erfindung in einer perspektivischen Ansicht,
- Fig. 2: einen Bausatz zur Fertigung des Reinigungskissens gemäß Fig. 1, in einer Explosionsdarstellung,
- Fig. 3: eine andere Ausführungsform des Reinigungskissens, in einer perspektivischen Ansicht,
- Fig. 4: einen Doppel-Materialzuschnitt für die Fertigung des Reinigungskissens gemäß Fig. 3,
- Fig. 5: ein Reinigungskissen mit zweischichtigem Kern, in einem Schnitt,
- Fig. 6: ein Reinigungskissen mit zwei Kammern, in einem Schnitt,
- Fig. 7: eine schematische Übersicht des Herstellungsverfahrens,
- Fig. 8: eine Einzelteilansicht der Klebenetzlage.

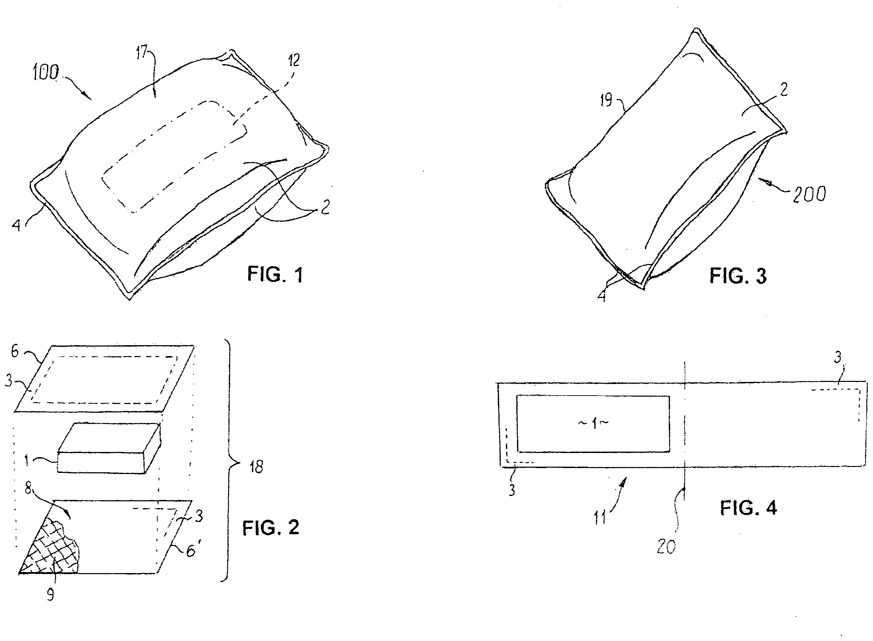

In Figur 1 ist ein Reinigungskissen 100 in einer ersten Ausführungsform gezeigt, umfassend einen in Fig. 2 schematisch dargestellten Kern 1 aus elastisch verformbarem Material, wie etwa überwiegend offenporigem Polyurethan-Weichschaum, und einen diesen außenseitig umgreifenden Reinigungsbezug 2.

Der Reinigungsbezug 2 besteht hier aus zwei flächigen, deckungsgleichen Materialzuschnitten 6, 6' (vgl. Fig. 2), von denen in einem ersten Ausführungsbeispiel der eine 6 aus Mikrofaser und der andere 6' aus Kunstleder gefertigt ist. Neben den genannten Materialien ist eine Vielzahl weiterer Materialien grundsätzlich einsetzbar. Die Auswahl der Materialien richtet sich nach den jeweils gewünschten Eigenschaften. Die Materialzuschnitte 6, 6' sind mit Übermaß gegenüber dem Kern 1 ausgebildet und in ihrem äußeren Randbereich 3 miteinander über eine seitlich abstehende und insbesondere umlaufende Klebe- und/oder Schweißnaht 4 etwa auf der halben Dicke des Kerns 1 miteinander verbunden. Das Reinigungskissen 100 ist in Draufsicht auf seiner Flachseite 17 (Reinigungsfläche) annähernd rechteckig, was grundsätzlich nicht zwingend ist. Die beschriebenen Teile sind in Figur 2 in der Stellung ihres Zusammenbaus als Teilesatz 18 gezeigt.

Optional ist der Materialzuschnitt 6' aus einem hochwertigen Naturleder, beispielsweise aus feinstem, weichem Elchleder gefertigt. Damit das Naturleder mit dem zweiten Materialzuschnitt 6 aus Mikrofaser-Frottiergewebe verklebt werden kann, ist es vorgesehen, den ledernen Materialzuschnitt 6' auf wenigstens auf seiner dem Kern 1 zugewandten Oberfläche 8 zumindest im Randbereich 3 mit einem thermisch aktivierbaren Klebstoff zu beschichten, insbesondere mit einer Klebegaze 9 flächig zu verbinden. Diese kann luft- und wasserdurchlässig sein und eine insgesamt ungeordnete Struktur aufweisen.

Das Reinigungskissen 100, 200, 300, 400 dient insbesondere zum Behandeln von glatten Oberflächen, wie etwa Scheiben oder lackierten Flächen, und kann dabei ohne Reinigungsmittel verwendet werden, zum Beispiel zum Abtransport von Feuchtigkeit.

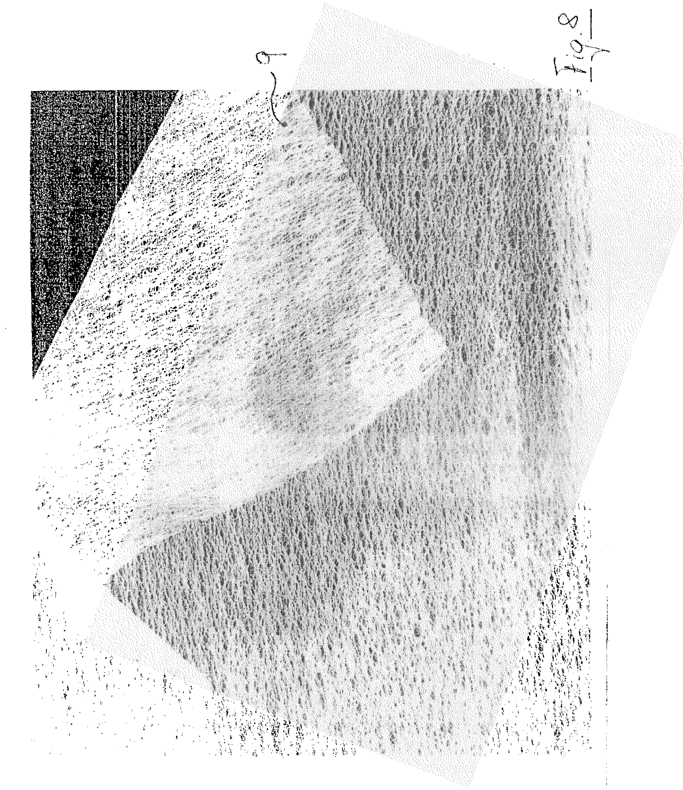

Wenigstens einer der vor dem Zusammenfügen erstellten Materialzuschnitte 6,6' ist auf seiner dem Kern (1) zugewandten Oberfläche 8 zumindest in seinem äußeren Randbereich mit einem aktivierbaren oder aktivierten Klebermaterial 9 beschichtet. Insbesondere spart es Material, wenn nur eine der beiden Materialzuschnitte mit einer solchen Gaze- oder Vlieslage 9, die im einzelnen in Figur 8 dargestellt ist, beschichtet ist. Zur Fertigung werden zunächst beispielsweise die noch ungeschnittene Lage für den Materialzuschnitt 6' und die Klebelage 9 über einen Walzprozess aufeinandergedrückt, dann werden die Materialzuschnitte 6' ausgestanzt oder ausgeschnitten, so dass jeder Materialzuschnitt 6' vollflächig an seiner später dem Kern 1 zugewandten Seite (Innenseite) von einer Lage aus Klebegaze 9 belegt ist.

Die das Klebermaterial 9 bildende Schicht aus Gaze oder Vlies bildet eine dünne, flexible, in alle Richtungen elastisch dehnbare, netzähnliche Struktur aus. Insbesondere ist sie unregelmäßig und mit einer Dicke von ca. 0,1 bis 0,3 Millimetern sehr dünn. Insbesondere kann die Dicke weniger als 0,15 Millimeter betragen. Dadurch und durch das geringe Flächengewicht von ca. 15 bis 30 g/qm ist der Materialaufwand sehr gering. Die unregelmäßige und sehr leichte und luftige Ausbildung der Klebegaze 9 ist in Figur 8 deutlich zu erkennen.

Die Lage 9 kann luft- und wasserdurchlässig sein und so einen guten Abtransport von Flüssigkeit ermöglichen. Eine dichte Folie kann alternativ für Sonderanwendungen in Betracht kommen, erlaubt jedoch dann nicht den Flüssigkeitsaustausch mit dem Kern 1.

Das Klebermaterial 9 basiert auf einem Copolyamid, das schon bei etwa 100 bis 130°C schmilzt. Vorzugsweise ist diese Seite auf eine Leder- oder Kunstlederlage 6' des Reinigungskissens aufgelegt,

Dieses Klebermaterial 9 ist zur Bildung einer insbesondere vollständig den Kern 1 umlaufenden Naht 4 thermisch aktivierbar oder aktiviert. Die Aktivierung kann dabei insbesondere über eine Hochfrequenzeinwirkung erfolgen, die im Nahtbereich 4 auf die zu verbindenden Materialzuschnitte 6, 6' in ihren äußersten Randbereichen 3 einwirkt und dadurch das Klebematerial 9 dort anlöst und eine sog. HF-Schweißverbindung als Naht 4 zwischen den Lagen 6, 6' herstellt.

Diese Naht 4 ist dabei bis zum äußersten Rand geschlossen und weist eine Breite von zumindest zwei Millimetern auf. Insbesondere kann die Breite fünf Millimeter betragen. Auch eine Breite bis zu acht Millimetern ist möglich. Der so gebildete Verbindungsbereich steht dann ähnlich wie eine Hutkrempe nach außen ab. Durch die große Breite der Naht ist eine hohe Formstabilität erreicht. Für besondere Anwendungen kann der Randbereich 3 auch zusätzlich vernäht sein.

Alternativ zur umlaufenden Naht kann wie in Figur 4 der Reinigungsbezug 2 aus einem um die Faltungslinie 20 zusammengelegten Doppel-Materialzuschnitt 11 bestehen, so dass dann die Naht 4 nur an drei Seiten um den Kern 1 gebildet werden muss. Nach dem Zusammenfalten und dreiseitigen Ultraschallverschweißen an Randbereichen 3 ergibt sich ergibt sich ein Reinigungskissen 200 mit einem nahtlosen Abschnitt 19 und einer die drei übrigen Seiten des Reinigungskissens 200 umgebenden Klebenaht 4. In Figur 3 ist abweichend zu Figur 4 nicht die kurze, sondern die lange Seite als Faltunglinie 20 ausgebildet.

Die beiden Materialzuschnitte 6, 6' können unterschiedliche Reinigungseigenschaften, Antibeschlageigenschaften und/oder Farben aufweisen. Insbesondere ist eine Materialpaarung aus einer Mikrofaserlage 6 und einer Kunstlederlage 6' oder eine Paarung aus einer Polyester-Textil-Lage 6 und einer Kunstlederlage 6' möglich. Alternativ können auch Ober- und Unterseite 6, 6' jeweils als Mikrofaserlagen oder jeweils als (Kunst-) Lederlagen gebildet sein. Die Mikrofaser ist gewebt, gewirkt oder ähnlich einem Vliesstoff. Das Kunstleder kann ca. 0,4 bis einen Millimeter dick sein. Ein guter Kompromiss aus Stabilität einerseits und geringem Gewicht andererseits sieht eine Lagendicke von 0,6 Millimetern vor.

Auch andere textil- und/oder lederartige Ausbildungen sind für den Reinigungsbezug 2, 2' möglich, insbesondere kann auch ein mit Polyurethan beschichteter Träger aus Kunst- oder Naturfasern als kunstlederartige Seite verwendet werden.

Bei zwei unterschiedlichen Materialien für die Materialzuschnitte 6, 6' ist die Klebelage 9 dabei vorzugsweise nicht einer Mikrofaserseite zugeordnet, sondern beispielsweise einer gegenüberliegenden Kunstlederseite. Ansonsten würde bei einem Bedrucken der Mikrofaserseite durch die thermische Fixierung des Drucks die Klebelage 9 anschmelzen.

Für eine gute Luft- und Wasserdurchlässigkeit kann wenigstens einer der Materialzuschnitte 6, 6' wenigstens teilweise perforiert sein, insbesondere eine Kunstlederseite.

Der Kern 1 kann zum Beispiel aus überwiegend offenzelligem Weichschaum oder aus einer Weichschaum-Vliesstoff-Materialkombination 13 bestehen.

Neben der in sich formstabilen Ausbildung des Kerns 1, zum Beispiel durch Bildung eines zusammenhängenden Schaumkörpers, etwa in Quaderform, kann der Kern 1 alternativ auch ein Granulat, insbesondere aus recyceltem Material, enthalten, zum Beispiel aus recyceltem Reifengummi. Die losen Recyclingteile können in einem Beutel verliersicher zu einem Kern 1 zusammengefasst sein.

Weiter kann auch ein Spalt oder Schlitz - nicht gezeichnet - zur Aufnahme eines NFC-RFID Tags oder Transponders enthalten sein, durch den etwa Werbung, Gutscheine, Bonuskarten oder ähnliches per Smartphone aktivierbar sind. Alternativ kann der Chip auch zwischen Kern 1 und Bezug 2 gelegen sein.

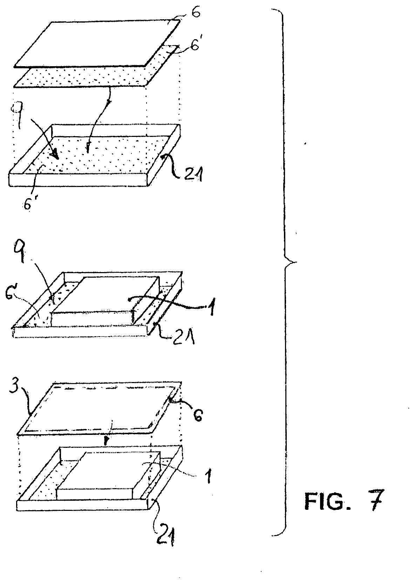

Um ein solches, insgesamt schwammartiges Reinigungskissen 100, 200, 300, 400 herzustellen, werden zunächst für eine obere und eine untere zu bildende Lage zwei Materialbahnen bereitgestellt, von denen zumindest eine - hier etwa die für die spätere untere Lage 6' - mit der elastischen Klebelage 9 zwischen aufeinanderpressenden Walzen ohne weitere Mittel nur durch Aufwalzen haftend verbunden wird. Im so beschichteten oder aufkaschierten Zustand der Materialbahn für den späteren Materialzuschnitt 6' werden die Materialbahnen vor der weiteren Verarbeitung zu passgenauen Materialzuschnitten 6, 6' ausgeschnitten oder ausgestanzt. Einer der Materialzuschnitte - hier der beschichtete Materialzuschnitt 6', wird dann derart in einen eine Unterschale einer Form bildenden Kasten 21 eingelegt, daß die ihn vollflächig überdeckende Lage aus Klebegaze 9 nach oben weist (Figur 7 oben). Anschließend wird der insbesondere quaderförmige, elastisch verformbare Kern 1 auf diesen Materialzuschnitt 6' aufgelegt. Auf den Kern 1 wird der zweite Materialzuschnitt 6 aufgelegt, wobei der erste und der zweite Materialzuschnitt 6, 6' den Kern 1 seitlich überragen (Figur 7 unten).

Nachfolgend werden durch einen Stempel - nicht gezeichnet - beide Materialzuschnitte 6, 6' unter Einfassung des Kerns 1 mittelbar über die einseitig aufliegende Klebegaze 9 aufeinandergedrückt. Über den Stempel wird eine Hochfrequenz in die Randbereiche eingetragen. Dabei wird die Klebelage 9 angelöst (aktiviert). Und die Materialzuschnitte 6, 6' werden miteinander dauerhaltbar verklebt und/oder insbesondere verschweißt.

Das so gebildete Reinigunsgkissen 100, 200, 300 400 kann dann der Form entnommen werden.

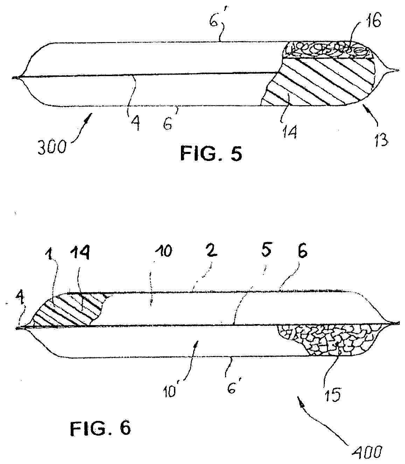

Ein in Figur 5 dargestelltes Reinigungskissen 300 unterscheidet sich von dem Reinigungskissen 100 nach Figur 1 dadurch, dass der Kern 1 in Figur 5 aus einer Weichschaum-Vliesstoff-Materialkombination 13 besteht. Die Weichschaum-Vliesstoff-Materialkombination 13 umfasst einen z. B. zwei Zentimeter dicken Weichschaum-Block 14 mit einer vorzugsweise darauf aufgeklebten, einen Zentimeter dicken, komprimierten Polster-Watte 16. Der Materialzuschnitt 6 aus Mikrofaser kontaktiert mit dem Weichschaum-Block 14, hingegen der lederne Materialzuschnitt 6' mit dem Vliesstoff.

In Figur 6 ist ein Reinigungskissen 400 dargestellt, welches über eine thermoplastische, flüssigkeitsundurchlässige Membran 5 in zwei Kammern 10, 10' unterteilt ist. Die Membran 5 ist aus einer 20 µm dünnen Polyurethanfolie gefertigt, die zusammen mit den Materialzuschnitten 6, 6' in ihrem Randbereich 3 ultraschallverschweißt ist. Die Kammer 10 beinhaltet den Weichschaum-Block 14, die andere Kammer 10' dagegen ist mit Weichschaum-Schnitzeln 15 dicht gefüllt. Die Weichschaum-Schnitzeln 15 sind mit einem ökologischen, gesundheitlich unbedenklichen, geruchslosen Antibeschlagmittel bzw. Reinigungs- oder Desinfektionsmittel getränkt, welches über nicht dargestellte runde Perforationen des Materialzuschnittes 6' nach außen gelangen kann, wenn auf das Reinigungskissen 400 per Hand ein leichter Druck ausgeübt wird.

Auch andere Kammerbefüllungen sind möglich, wenn sich zwischen den Materialzuschnitten 6, 6' eine flüssigkeitsundurchlässige, elastische Membran 5 erstreckt, die das Reinigungskissen in zwei Kammern 10, 10' teilt.

Dabei können die Kammern 10, 10' mit gleichen oder sich voneinander unterscheidenden Materialien, die den Kern 1 bilden, gefüllt sein.

Auf einer oder beiden Seiten des Reinigungsbezugs 2, 2' kann insbesondere auf die großflächige Flachseite 17, wenigstens ein Bild 12, Logo, eine Werbebotschaft oder dergleichen ein- oder mehrfarbig aufgetragen sein. Insbesondere kann dieser Druck - oder ein weiterer Druck, zum Beispiel eine Herstellerangabe, bis zum Rand, über die Klebe- oder Schweißnaht 4 hinaus, aufgetragen sein. Hier zeigt der breite (mehrere Millimeter), formstabile Rand 3 besondere Vorteile: Die Randbreite reicht gut aus, um dort etwa einen Hersteller des Reinigungskissen 100, 200, 300, 400 mit Adresse anzugeben, was die Wertigkeit dieses Artikels besonders unterstreicht. Auch eine Angabe zum Beispiel eines Rechteinhabers für das Bild 12 oder eine Waschanleitung kann dort gut sichtbar aufgedruckt sein. Insbesondere mit der Waschanleitung wird die Lebensdauer des gebildeten Reinigungskissens 100, 200, 300, 400 weiter verlängert.

## Patentansprüche

1. Reinigungskissen (100;200;300;400) zum Behandeln von insbesondere glatten Oberflächen, wobei das Reinigungskissen (100;200;300;400) einen elastisch verformbaren Kern (1) und einen diesen umgebenden Reinigungsbezug (2) umfasst, der aus zwei Materialzuschnitten (6;6') besteht, die den Kern (1) zwischen sich einfassen und an einem den Kern (1) umgebenden Randbereich (3) über wenigstens eine Klebe- und/oder Schweißnaht (4) miteinander verbunden sind, wobei wenigstens einer der Materialzuschnitte (6,6') auf seiner dem Kern (1) zugewandten Oberfläche (8) zumindest in seinem äußeren Randbereich (3) mit einem aktivierbaren oder aktivierten Klebermaterial (9) beschichtet ist,
**dadurch gekennzeichnet,**
**dass** das Klebermaterial (9) als aktivierbare Lage flächig auf wenigstens einem der Materialzuschnitte (6;6') auf seiner dem Kern (1) zugewandten Oberfläche (8) vollflächig in Form einer Klebegaze, aufgelegt ist, das zur Bildung der Naht über Eintragung von Ultraschall, Hochfrequenz oder Heißverklebung thermisch aktiviert ist.

2. Reinigungskissen (100;200;300;400) nach Anspruch 1,
**dadurch gekennzeichnet,**
**dass** die Naht (4) bis zum äußersten Rand geschlossen ist und eine Breite von zumindest zwei Millimetern aufweist.

3. Reinigungskissen (100;200;300;400) nach einem der Ansprüche 1 oder 2,
**dadurch gekennzeichnet,**
**dass** die Klebegaze (9) eine netzähnliche Struktur aufweist, oder die Klebegaze (9) durch eine in sich unregelmäßige Vlieslage gebildet ist.

4. Reinigungskissen (100;200;300;400) nach Anspruch 3,
**dadurch gekennzeichnet,**
**dass** die Klebegaze (9) durch Walzen mit dem Material des jeweiligen Materialzuschnitts (6;6') verbunden ist.

5. Reinigungskissen (200) nach einem der Ansprüche 1 bis 4,
**dadurch gekennzeichnet,**
**dass** der Reinigungsbezug (2) aus einem zusammengelegten Doppel-Materialzuschnitt (11) besteht.

6. Reinigungskissen (100;200;300;400) nach einem der Ansprüche 1 bis 5,
**dadurch gekennzeichnet,**
**dass** der Reinigungsbezug (2) textil- und/oder lederartig ist.

7. Reinigungskissen (100;200;300;400) nach einem der vorhergehenden Ansprüche,
**dadurch gekennzeichnet,**
**dass** auf einer oder beiden Seiten (2) wenigstens ein Bild (12), Logo, Werbebotschaft oder dergleichen ein- oder mehrfarbig, bis zum Rand, über die Klebe- oder Schweißnaht (4) hinaus, aufgetragen ist.

8. Reinigungskissen (100;200;300;400) nach einem der vorhergehenden Ansprüche,
**dadurch gekennzeichnet,**
**dass** der Kern (1) aus überwiegend offenzelligen Weichschaum oder aus einer Weichschaum- Vliesstoff-Materialkombination (13) besteht.

9. Reinigungskissen (100;200;300;400) nach einem der vorhergehenden Ansprüche,
**dadurch gekennzeichnet,**
**dass** der Kern (1) ein Granulat, insbesondere aus recyceltem Material, enthält.

10. Verfahren zur Herstellung eines Reinigungskissens (100;200; 300;400) nach einem der vorhergehenden Ansprüche,
**dadurch gekennzeichnet,**
**dass** für eine obere und eine untere zu bildende Lage zwei Materialbahnen bereitgestellt werden, von denen zumindest eine mit einer Klebelage (9) in Form einer Klebegaze (9) versehen und im so beschichteten Zustand zu einem Materialzuschnitt (6;6') ausgeschnitten wird, dann einer der Materialzuschnitte (6;6') in einen Kasten (21) eingelegt wird, wobei ein insbesondere quaderförmiger, elastisch verformbarer Kern (1) auf diesen Materialzuschnitt (6;6') und auf den Kern (1) der zweite Materialzuschnitt (6';6) aufgelegt wird, wobei der erste und der zweite Materialzuschnitt (6;6') den Kern (1) seitlich überragen und wobei nachfolgend beide Materialzuschnitte unter Einfassung des Kerns (1) aufeinandergedrückt werden und dabei die Klebelage (9) angelöst wird und die Materialzuschnitte (6;6') miteinander verklebt und/oder verschweißt werden.

11. Verfahren nach Anspruch 10,
**dadurch gekennzeichnet,**
**dass** das Verschweißen und/oder Verkleben durch Ultraschall- Hochfrequenzeinwirkung oder Heißverklebung aktivierbar ist.

12. Verfahren nach einem der Ansprüche 10 oder 11,
**dadurch gekennzeichnet,**
**dass** zumindest eine Materialbahn durch Aufwalzen mit der in Form der Klebegaze (9) ausgebildeten Klebelage (9) versehen wird.

## Claims

1. A cleaning pad (100;200;300;400) for treating smooth surfaces in particular,
wherein the cleaning pad (100;200;300;400) comprises an elastically deformable core (1) and a cleaning cover (2) which surrounds the core, the cover consisting of two material blanks (6; 6') which enclose the core (1) therebetween and which are connected together by way of at least one adhesive- and/or weld seam (4) at an edge area (3) which surrounds the core (1), at least one of the material blanks (6, 6') being coated, at least in the outer edge area (3) thereof, with an activatable or activated adhesive material (9) on the surface (8) of said blank which faces the core (1),
**characterized in that**
the adhesive material (9), in the form of an adhesive gauze, is placed as an activatable layer flat on at least one of the material blanks (6; 6') on the full surface (8) thereof which faces the core (1), the adhesive material being thermally activated through the introduction of ultrasound, high-frequency or hot gluing.

2. The cleaning pad (100;200;300;400) in accordance with claim 1,
**characterized in that**
the seam (4) is closed up to the outermost edge and has a width of at least two millimetres.

3. The cleaning pad (100; 200; 300; 400) in accordance with one of claims 1 to 2,
**characterized in that**
the adhesive gauze (9) has a net-like structure or the adhesive gauze (9) is formed from an irregular non-woven layer.

4. The cleaning pad (100;200;300;400) in accordance with claim 3,
**characterized in that**
the adhesive gauze (9) is connected to the material of the respective material blank (6; 6') by rollers.

5. The cleaning pad (200) in accordance with one of claims 1 to 4,
**characterized in that**
the cleaning cover (2) consists of a combined double-material blank (11).

6. The cleaning pad (100; 200; 300; 400) in accordance with one of claims 1 to 5,
**characterized in that**
the cleaning cover (2) is textile-like or leather-like.

7. The cleaning pad (100;200;300;400) in accordance with one of the preceding claims,
**characterized in that**
at least one image (12), logo, advertising message or the like is applied in a single or multicoloured fashion up to the edge and past the adhesive or welded seam (4) on one or both sides (2).

8. The cleaning pad (100;200;300;400) in accordance with one of the preceding claims,
**characterized in that**
the core (1) consists primarily of an open-pored soft foam or of a soft foam - woven material combination (13).

9. The cleaning pad (100;200;300;400) in accordance with one of the preceding claims,
**characterized in that**
the core (1) contains a granulate, in particular a granulate made of recycled material.

10. A method for manufacturing a cleaning pad (100;200; 300;400) according to one of the preceding claims, **characterized in that,**
two material webs are prepared for an upper and a lower layer to be formed, at least one web of which being provided with an adhesive layer (9) in the form of an adhesive gauze (9), and so coated is cut out into a material blank (6; 6'), whereupon one of the material blanks (6; 6') is placed into a box (21), wherein an elastically deformable, in particular cuboid core (1) is placed onto this material blank (6; 6') and onto the core (1) of the second material blank (6'; 6), the first and the second material blank (6; 6') laterally protruding past the core (1), and thereafter both material blanks are pressed onto one another, enclosing the core (1) and in the process dissolving the adhesive layer (9), and the material blanks (6; 6') being bonded and/or welded together.

11. The method in accordance with claim 10, **characterized in that** the welding and/or bonding can be activated by an ultrasound-high-frequency effect or by hot gluing.

12. The method in accordance with one of claims 10 or 11, **characterized in that** at least one material web is provided, by way of rolling, with the adhesive layer (9) in the form of the adhesive gauze (9).

## Revendications

1. Tampon de nettoyage (100 ; 200 ; 300 ; 400) servant à traiter spécialement les surfaces lisses, où le tampon de nettoyage (100 ; 200 ; 300 ; 400) comprend un noyau (1) déformable de manière élastique et un revêtement nettoyant (2) entourant celui-ci, qui est constitué de deux découpes de matière (6 ; 6') qui enferment le noyau entre elles et qui sont assemblées l'une à l'autre dans une zone périphérique (3) entourant le noyau (1) par le biais d'au moins un joint collé et/ou soudé, où au moins une des découpes de matière (6, 6') est revêtue avec une matière adhésive (9) activable ou activée sur sa surface (8) orientée vers le noyau (1), au moins dans la zone périphérique (3) extérieure,
**caractérisé en ce**
**que** la matière adhésive (9) est déposée à plat sur toute la surface sous forme d'une couche activable sur au moins une des découpes de matière (6 ; 6') sur sa surface (8) orientée vers le noyau (1) sous forme d'une gaze adhésive, qui est activée thermiquement par un apport d'ultrasons, de hautes fréquences ou un thermocollage pour la formation du joint.

2. Tampon de nettoyage (100 ; 200 ; 300 ; 400) selon la revendication 1,
**caractérisé en ce**
**que** le joint (4) est fermé jusqu'à son bord le plus à l'extérieur et présente une largeur d'au moins deux millimètres.

3. Tampon de nettoyage (100 ; 200 ; 300 ; 400) selon l'une des revendications 1 ou 2,
**caractérisé en ce**
**que** la gaze adhésive (9) présente une structure semblable à un filet, ou la gaze adhésive (9) est formée par une couche de non tissé irrégulière.

4. Tampon de nettoyage (100 ; 200 ; 300 ; 400) selon la revendication 3,
**caractérisé en ce**
**que** la gaze adhésive (9) est reliée avec la matière de la découpe de matière (6 ; 6') respective par un laminage.

5. Tampon de nettoyage (200) selon l'une des revendications 1 à 4,
**caractérisé en ce**
**que** le revêtement nettoyant (2) est constitué par une découpe de matière (11) pliée en double.

6. Tampon de nettoyage (100 ; 200 ; 300 ; 400) selon l'une des revendications 1 à 5,
**caractérisé en ce**
**que** le revêtement nettoyant (2) est de type textile et/ou de type cuir.

7. Tampon de nettoyage (100 ; 200 ; 300 ; 400) selon l'une quelconque des revendications précédentes,
**caractérisé en ce**
**qu'**au moins une image (12), un logo, un message publicitaire ou similaire, monochrome ou multicolore, est rapporté sur un ou sur les deux côtés (2) jusqu'au bord, pardessus le joint adhésif ou collé (4) et au-delà.

8. Tampon de nettoyage (100 ; 200 ; 300 ; 400) selon l'une quelconque des revendications précédentes,
**caractérisé en ce**
**que** le noyau (1) est constitué principalement d'une mousse souple à cellules ouvertes ou d'une combinaison de matériaux mousse souple - non tissé (13).

9. Tampon de nettoyage (100 ; 200 ; 300 ; 400) selon l'une quelconque des revendications précédentes,
**caractérisé en ce**
**que** le noyau (1) contient un granulat, notamment à base d'une matière recyclée.

10. Procédé de fabrication d'un tampon de nettoyages (100 ; 200 ; 300 ; 400) selon l'une quelconque des revendications précédentes, **caractérisé en ce que**, pour former une couche supérieure et une couche inférieure, deux bandes de matière sont préparées, parmi lesquelles au moins une est munie d'une couche adhésive (9) sous forme de gaze adhésive (9) et est découpée à l'état ainsi revêtue pour donner une découpe de matière (6 ; 6'), ensuite, une des découpes de matière (6 ; 6') est déposée dans une boite (21), où un noyau (1) déformable élastiquement, en particulier en forme de parallélépipède, est déposé sur cette découpe de matière (6 ; 6') et sur le noyau (1) de la deuxième découpe de matière (6 ; 6), où les première et deuxième découpes de matière (6 ; 6') passent latéralement par-dessus le noyau (1) et où, dans la suite, les deux découpes de matière sont pressées l'une sur l'autre en enfermant le noyau (1) et ce faisant, la couche adhésive (9) est dissoute et les découpes de matière (6 ; 6') sont collées et/ou soudées ensemble.

11. Procédé selon la revendication 10, **caractérisé en ce**
**que** le soudage et/ou le collage sont activables par un effet d'ultrasons, de hautes fréquences ou par un collage à chaud.

12. Procédé selon l'une quelconque des revendications 10 ou 11, **caractérisé en ce**
**qu'**au moins une bande de matière est munie de la couche adhésive (9) sous la forme de gaze adhésive (9) formée par le laminage.
